# DEMANDE DE BREVET EUROPEEN

(11) **EP 4 387 342 A1**
(43) Date de publication de la demande: **19.06.2024**
(21) Numéro de dépôt: 23212049.3
(22) Date de dépôt: 24.11.2023
(51) Int. Cl.: H04W 52/02

(54) **PROCÉDÉ D'ACTIVATION D'AU MOINS UNE FONCTIONNALITÉ D'UN ÉQUIPEMENT PASSERELLE**

(30) Priorité: 07.12.2022 FR 2212863
(71) Demandeur: Orange, 92130 Issy-les-Moulineaux (FR)
(72) Inventeur: BERTOLUS, Cédric, 92326 CHATILLON CEDEX (FR)
(74) Mandataire: Vidon Brevets & Stratégie

(57) **Abrégé**

L'invention se rapporte à un procédé d'activation d'au moins une fonctionnalité d'un équipement passerelle (GW) faisant l'interface entre un réseau étendu (WAN) et un réseau local (LAN), ladite fonctionnalité étant liée audit réseau local. Un tel procédé comprend, au niveau d'un dispositif électronique connecté audit réseau étendu, l'activation (22) via ledit réseau étendu de ladite au moins une fonctionnalité liée audit réseau local, lorsqu'une information de localisation (IL) d'au moins un terminal de communication mobile (TC) associé audit équipement passerelle est représentative d'une proximité géographique dudit terminal de communication mobile avec ledit équipement passerelle

## Description

### Domaine technique

L'invention se situe dans le domaine des réseaux de communication, et plus particulièrement des réseaux de communication locaux mis en oeuvre au moyen d'équipements électroniques de type passerelle. Plus particulièrement, l'invention se rapporte à des techniques permettant de favoriser des économies d'énergies au sein de tels réseaux.

### Art antérieur

Dans le contexte économique, politique, et environnemental actuel, la maitrise de la consommation énergétique est devenue un enjeu majeur, tant au niveau collectif qu'individuel.

À ce titre, la consommation électrique des appareils électroniques qui équipent la plupart des foyers (télévision, ordinateur, réfrigérateur, etc.) est particulièrement scrutée, en ce qu'elle représente une part importante de la consommation électrique totale d'un foyer, et en ce que des axes d'amélioration pour optimiser la consommation de tels équipements existent.

Des études ont par exemple montré qu'une majeure partie de la consommation électrique d'une passerelle domestique - plus communément appelée « *box* » ou « *box internet* », utilisée pour fournir un accès à Internet aux différents terminaux et objets connectés du foyer (ordinateurs, tablette, smartphone, etc.) - est réalisée lorsque la passerelle n'est pas utilisée, c'est-à-dire lorsque la passerelle est branchée et disponible, mais qu'elle n'est pas sollicitée et qu'aucune donnée n'y transite.

Face à cette situation, les opérateurs qui commercialisent ces équipements ont développé des solutions visant à réduire leur consommation électrique, en permettant notamment à l'utilisateur de désactiver certaines fonctionnalités de la passerelle lorsqu'il le souhaite. Il s'agit par exemple, par la mise à disposition de boutons dédiés sur l'appareil et/ou d'une interface graphique de paramétrage manuel de plages horaires de fonctionnement, d'offrir à l'utilisateur la possibilité de placer la passerelle dans un état général de veille plus ou moins profond, ou encore de désactiver de manière temporaire certaines fonctionnalités ciblées telles que le WiFi.

Malgré ces efforts, force est de constater que le taux d'adoption par les utilisateurs de ces fonctionnalités d'économie d'énergie reste cependant très faible. Une des raisons principales tient à ce que ces solutions existantes sont encore perçues comme trop contraignantes, notamment lorsque l'utilisateur a besoin d'accéder à des fonctionnalités de la passerelle précédemment désactivées dans ce cadre. Par exemple, dans le cas potentiellement fréquent où un utilisateur souhaite se connecter à son réseau WiFi sur une plage horaire durant laquelle cette fonctionnalité a été programmée pour être désactivée, il est contraint d'effectuer une action - par exemple se déplacer jusqu'à la pièce où est installée sa passerelle domestique pour appuyer sur un bouton - pour réactiver la fonctionnalité en question. Par ailleurs, même après avoir effectué cette action, la fonctionnalité n'est pas nécessairement immédiatement disponible : la réactivation de certaines fonctionnalités peut en effet prendre du temps - par exemple, la sortie d'une veille profonde de la passerelle est souvent lente et laborieuse, et peut durer plusieurs dizaines de secondes - temps d'accès que beaucoup d'utilisateurs ne sont plus disposés à supporter. Ces frictions dans l'utilisation de ces fonctions et la répétition de telles situations peuvent engendrer une certaine frustration chez les utilisateurs, qui sont alors peu enclin à continuer d'utiliser les mécanismes d'économie d'énergie pourtant mis à leur disposition. Il en résulte que ceux-ci sont dans les faits très peu ou pas utilisés.

Il existe donc un besoin pour une solution permettant d'améliorer les fonctionnalités existantes d'économie d'énergie au niveau des équipements de type passerelle, notamment en rendant les opérations de réactivation de fonctionnalités désactivées plus transparentes et moins contraignantes pour les utilisateurs.

### Résumé de l'invention

La présente technique permet de proposer une solution visant à remédier à certains inconvénients de l'art antérieur. Selon un aspect, la présente technique se rapporte en effet à un procédé d'activation d'au moins une fonctionnalité d'un équipement passerelle faisant l'interface entre un réseau étendu et un réseau local, ladite fonctionnalité étant liée audit réseau local. Un tel procédé comprend, au niveau d'un dispositif électronique connecté audit réseau étendu, l'activation via ledit réseau étendu de ladite au moins une fonctionnalité liée audit réseau local, lorsqu'une information de localisation d'au moins un terminal de communication mobile associé audit équipement passerelle est représentative d'une proximité géographique dudit terminal de communication mobile avec ledit équipement passerelle.

De cette manière, il est possible de rétablir automatiquement et de manière transparente pour l'utilisateur (i.e. sans friction) des fonctionnalités d'un réseau local qui avaient précédemment été désactivées (à des fins d'économies d'énergie par exemple), afin que ces fonctionnalités soient actives au moment où l'utilisateur est susceptible d'en avoir besoin. Les principaux freins à l'adoption par les utilisateurs des solutions d'économie d'énergie proposées par les opérateurs qui commercialisent des équipements passerelle sont ainsi levés.

Dans un mode de réalisation particulier, ladite fonctionnalité appartient au groupe comprenant :
- une sortie d'un état de veille dudit équipement passerelle ; et/ou
- une activation d'au moins un point d'accès sans fil au niveau dudit équipement passerelle.

De cette manière, la présente technique permet, de manière transparente pour l'utilisateur, de sortir l'équipement passerelle d'un état de veille afin de rendre disponible le réseau local, et/ou d'activer une interface sans-fil de l'équipement passerelle (typiquement l'interface WiFi) afin de rendre disponible le réseau local sans fil.

Dans un premier mode de réalisation particulier, ladite information de localisation prend la forme d'une donnée indicative de proximité, reçue par ledit dispositif électronique en provenance dudit terminal de communication, confirmant ladite proximité géographique dudit terminal de communication mobile avec ledit équipement passerelle.

Dans un deuxième mode de réalisation particulier, ladite information de localisation prend la forme de coordonnées géographiques dudit terminal de communication mobile reçues par ledit dispositif électronique en provenance dudit terminal de communication mobile, et ladite proximité géographique dudit terminal de communication mobile avec ledit équipement passerelle est établie par le dispositif électronique lorsque lesdites coordonnées géographiques sont représentatives d'une présence dudit terminal de communication mobile dans une zone géographique de référence préalablement déterminée et associée audit équipement passerelle.

Selon une caractéristique particulière de ce deuxième mode de réalisation, ladite zone géographique de référence est déterminée automatiquement en fonction d'une adresse associée audit équipement passerelle.

Selon une caractéristique particulière de ce deuxième mode de réalisation, ladite zone géographique de référence est une zone circulaire dont le centre correspond à une position géographique dudit équipement passerelle, et dont le rayon est préalablement déterminé.

Dans un troisième mode de réalisation particulier, ladite information de localisation prend la forme de données représentatives d'un rattachement courant dudit terminal de communication mobile à au moins une antenne-relais de position géographique connue au sein d'un réseau cellulaire comprenant ladite au moins une antenne-relais, reçues par ledit dispositif électronique en provenance dudit terminal de communication ou en provenance d'un équipement tiers d'un opérateur dudit réseau cellulaire, et ladite proximité géographique dudit terminal de communication mobile avec ledit équipement passerelle est établie par le dispositif électronique lorsque lesdites données sont représentatives d'un rattachement courant dudit terminal de communication mobile à au moins une antenne-relais de référence préalablement déterminée dudit réseau cellulaire.

Selon une caractéristique particulière de ce troisième mode de réalisation, ladite au moins une antenne-relais de référence est déterminée automatiquement en fonction d'une adresse associée audit équipement passerelle et/ou en fonction d'une identification préalable d'au moins une antenne-relais à laquelle le terminal de communication mobile est rattaché lorsque ledit terminal de communication mobile est connecté à un réseau local sans fil fourni par ledit équipement passerelle.

Selon un autre aspect, la présente technique se rapporte également à un dispositif électronique pour l'activation d'au moins une fonctionnalité d'un équipement passerelle faisant l'interface entre un réseau étendu et un réseau local, ledit dispositif électronique étant connecté audit réseau étendu et ladite fonctionnalité étant liée audit réseau local. Un tel dispositif électronique comprend des moyens d'activation de ladite au moins une fonctionnalité liée audit réseau local, mis en oeuvre lorsqu'une information de localisation d'au moins un terminal de communication mobile associé audit équipement passerelle est représentative d'une proximité géographique dudit terminal de communication mobile avec ledit équipement passerelle.

Les moyens dudit dispositif électronique peuvent être adaptés à la mise en oeuvre l'un quelconque des modes de réalisation du procédé de la présente demande.

Selon un autre aspect, la technique proposée se rapporte également à un terminal de communication mobile associé à un équipement passerelle faisant l'interface entre un réseau étendu et un réseau local, ledit terminal de communication mobile étant configuré pour transmettre à un dispositif électronique selon l'un quelconque des modes de réalisation décrit précédemment une information de localisation représentative d'une proximité géographique dudit terminal de communication mobile avec ledit équipement passerelle.

Selon un autre aspect, la technique proposée se rapporte également à un produit programme d'ordinateur téléchargeable depuis un réseau de communication et/ou stocké sur un support lisible par ordinateur et/ou exécutable par un microprocesseur, comprenant des instructions de code de programme pour l'exécution d'un procédé d'activation d'au moins une fonctionnalité d'un équipement passerelle tel que décrit précédemment, lorsqu'il est exécuté sur un ordinateur.

La technique proposée vise également un support d'enregistrement lisible par un ordinateur sur lequel est enregistré un programme d'ordinateur comprenant des instructions de code de programme pour l'exécution des étapes du procédé tel que décrit précédemment, dans l'un quelconque de ses modes de réalisation.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau, par exemple le réseau Internet.

Les différents modes de réalisation mentionnés ci-dessus sont combinables entre eux pour la mise en oeuvre de l'invention.

### Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
[Fig 1] illustre un exemple d'environnement dans lequel est mise en oeuvre la technique proposée, dans un mode de réalisation particulier ;
[Fig 2] illustre les principales étapes du procédé d'activation d'au moins une fonctionnalité d'un équipement passerelle, dans un mode de réalisation particulier de la technique proposée ;
[Fig 3a] présente un premier exemple de détermination d'une proximité géographique d'un terminal de communication mobile avec un équipement passerelle, dans un mode de réalisation particulier de la technique proposée ;
[Fig 3b] présente un deuxième exemple de détermination d'une proximité géographique d'un terminal de communication mobile avec un équipement passerelle, dans un mode de réalisation particulier de la technique proposée ;
[Fig 4] décrit une architecture simplifiée d'un dispositif électronique pour la mise en oeuvre de la technique proposée, dans un mode de réalisation particulier.

### Description détaillée de l'invention

La présente demande permet de remédier à certains des inconvénients précités.

Sur toutes les figures du présent document, les éléments et étapes de même nature sont désignés par une même référence.

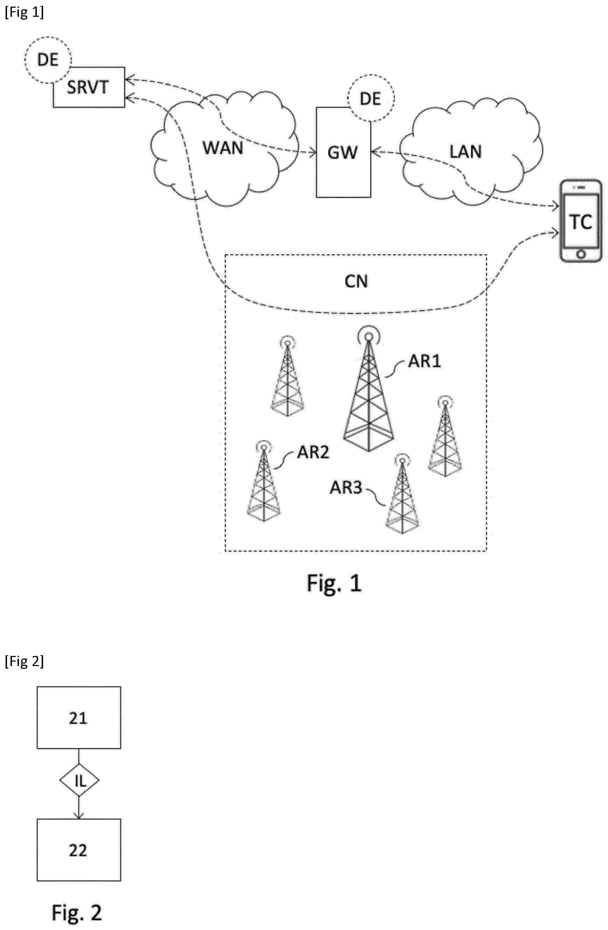

La présente technique se situe dans un contexte global d'objectif d'économie d'énergie, et est mise en oeuvre dans un environnement tel qu'illustré en relation avec la **figure 1**, dans lequel un équipement passerelle GW (également parfois dénommé plus simplement *« passerelle* » dans la suite du document) est utilisé pour faire l'interface entre un réseau local LAN et un réseau étendu WAN. Plus particulièrement, le réseau local LAN est typiquement mis en oeuvre grâce aux fonctionnalités offertes par l'équipement passerelle GW (interfaces Ethernet, interfaces WiFi, routeur, etc.), et le réseau étendu WAN est classiquement le réseau Internet. La passerelle GW permet ainsi à différents terminaux de communication (smartphones, tablettes, ordinateurs, télévision connectée, objets connectés, etc.) connectés au réseau local LAN d'accéder au réseau étendu WAN. Certains de ces terminaux, comme le terminal de communication TC illustré sur la figure 1, sont des terminaux de communication sans-fil, spécifiquement conçus pour être utilisés en situation de mobilité. De tels terminaux de communication mobiles (dont les smartphones sont un exemple typique) ne sont pas amenés à être connectés en permanence à un réseau local, aussi ils disposent généralement d'interfaces de communication additionnelles (en plus des interfaces de communication sans-fil de courte ou moyenne portée de type WiFi) leur permettant d'accéder au réseau étendu WAN même lorsqu'ils ne sont pas connectés au réseau local LAN fourni par la passerelle GW. Ces interfaces de communication additionnelles prennent typiquement la forme d'interfaces de communication cellulaires (2G, 3G, 4G, 5G, etc.) permettant notamment au terminal de communication mobile TC d'accéder au réseau étendu WAN par l'intermédiaire d'un réseau cellulaire CN comprenant une multitude d'antenne-relais (AR1, AR2, AR3, etc.) assurant la couverture d'un territoire.

On présente maintenant, en relation avec la **figure 2**, dans un mode de réalisation particulier, un premier aspect de la présente technique se rapportant à un procédé d'activation d'au moins une fonctionnalité d'un équipement passerelle GW faisant l'interface entre un réseau étendu WAN (typiquement le réseau Internet) et un réseau local LAN. Plus particulièrement, la ou les fonctionnalités de l'équipement passerelle visées par le procédé d'activation selon la technique proposée sont des fonctionnalités liées au réseau local LAN, en ce qu'elles se rapportent à la fourniture ou à la configuration d'un tel réseau. Des exemples de telles fonctionnalités sont donnés ultérieurement dans le présent document. Le procédé est mis en oeuvre par un dispositif électronique DE connecté au réseau étendu WAN. Comme illustré sur la figure 1, un tel dispositif électronique DE est par exemple intégré dans ou confondu avec un serveur de traitement SRVT connecté au réseau étendu WAN, ou, de manière alternative, intégré dans ou confondu avec l'équipement passerelle GW.

Dans le cadre de la présente technique, le dispositif électronique DE dispose d'une information de localisation IL d'au moins un terminal de communication mobile TC associé à l'équipement passerelle GW. Dans un mode de réalisation particulier correspondant à celui illustré en relation avec la figure 2, une telle information de localisation IL est par exemple obtenue dans une étape 21 d'obtention de cette information, mise en oeuvre par le dispositif électronique DE.

Par terminal de communication mobile « *associé* » à équipement passerelle, on entend ici que le terminal de communication mobile est déjà connu de l'équipement passerelle ou référencé auprès de cet équipement passerelle, par exemple parce que ce terminal de communication TC s'est déjà connecté par le passé au réseau local LAN fourni par la passerelle GW (par exemple via un protocole de communication sans-fil de type WiFi, reposant sur la norme IEEE 802.11), et que cette connexion a été tracée. En d'autres termes, dans au moins une structure de données, une association existe entre le terminal de communication mobile TC et l'équipement passerelle GW.

L'information de localisation IL permet d'estimer la position géographique, éventuellement approximative, du terminal de communication TC, soit de manière absolue soit relativement à la position d'un autre équipement. Comme décrit ultérieurement dans différents modes de réalisation de la technique proposée, une telle information de localisation IL peut ainsi prendre différentes formes.

Dans une étape 22, lorsque l'information de localisation IL est représentative d'une proximité géographique du terminal de communication mobile TC avec l'équipement passerelle GW, le dispositif électronique DE déclenche l'activation d'au moins une fonctionnalité de cet équipement passerelle. De manière optionnelle, avant de déclencher une telle activation, le dispositif électronique DE vérifie que la fonctionnalité en question est bien désactivée au niveau de l'équipement passerelle, par exemple en interrogeant une base de données comprenant cette information.

L'étape 22 d'activation d'au moins une fonctionnalité de l'équipement passerelle peut prendre différentes formes, selon la nature du dispositif électronique qui met en oeuvre le procédé selon la présente technique.

Ainsi, lorsque le dispositif électronique est intégré dans ou confondu avec un serveur de traitement SRVT du réseau étendu WAN, l'étape 22 d'activation prend par exemple la forme d'une étape de transmission, via ce réseau étendu, d'une requête d'activation de ladite au moins une fonctionnalité, à destination de l'équipement passerelle GW.

Lorsque le dispositif électronique est de manière alternative intégré dans ou confondu avec l'équipement passerelle GW, l'étape 22 d'activation consiste alors plus simplement à générer au niveau de ce dispositif DE une commande d'activation de ladite au moins une fonctionnalité par l'équipement passerelle GW.

Selon la technique proposée, les fonctionnalités de la passerelle ainsi activables par le dispositif électronique DE, sur la base de données obtenues via le réseau étendu WAN, sont liées au réseau local LAN. De telles fonctionnalités peuvent notamment comprendre une sortie d'un état de veille de l'équipement passerelle et/ou une activation d'au moins un point d'accès sans fil, typiquement un point d'accès WiFi, au niveau dudit équipement passerelle. La sortie d'un état de veille permet de rendre disponible le réseau local LAN, en activant par exemple de manière globale un ensemble de fonctionnalités principales de la passerelle précédemment mises en sommeil afin notamment de limiter sa consommation électrique. L'activation, plus ciblée, d'au moins un point d'accès sans fil vise par exemple à rétablir les capacités de communication sans-fil du réseau local (la passerelle fournit alors également un réseau local sans-fil). Les exemples précédents sont donnés à titre illustratif et non limitatif, et d'autres fonctionnalité de la passerelle GW sont susceptibles de faire l'objet du procédé d'activation selon la technique proposée.

En d'autres termes, selon le principe général de la présente technique, il est proposé d'activer de manière automatique et transparente pour l'utilisateur, sur la base de données transmises à l'équipement passerelle GW via le réseau étendu WAN (par exemple une requête d'activation ou des informations de localisation), certaines fonctionnalités relatives à la mise à disposition et/ou à la configuration du réseau local LAN fourni par ladite passerelle, lorsqu'il est détecté qu'au moins un terminal de communication mobile référencé auprès de la passerelle est ou devient suffisamment proche de la passerelle. La proximité géographique du terminal de communication mobile avec la passerelle est en effet généralement également représentative de la présence à proximité de ladite passerelle de l'utilisateur possesseur de ce terminal, c'est-à-dire d'un individu susceptible d'avoir besoin d'accéder aux fonctionnalités offertes par la passerelle. De cette manière, les freins qui s'opposent à l'adoption par les utilisateurs des mécanismes d'économie d'énergie proposés dans les équipements de type passerelle sont levés, puisque la réactivation de fonctionnalités précédemment désactivées dans ce cadre est effectuée automatiquement et en toute transparence, sans que l'utilisateur ait à effectuer une action dédiée pour initier une telle réactivation, et sans que la durée de l'opération soit perceptible pour l'utilisateur puisque la réactivation est en quelque sorte effectuée en avance, par anticipation, avant même que l'utilisateur ait manifesté un besoin d'accéder à la fonctionnalité précédemment désactivée. Par ailleurs, lorsqu'elle se rapporte à la réactivation automatique de fonctionnalités de communications sans fil de l'équipement passerelle (typiquement le WiFi), un autre avantage collatéral de la technique proposée peut-être constaté d'un point de vue plus macroscopique. L'activation de la passerelle en tant que point d'accès WiFi conduit en effet à une connexion automatique du terminal de communication à ce point d'accès (sous réserve qu'il y ait déjà été connecté par le passé, ce qui est généralement le cas s'agissant d'un terminal de communication et d'une passerelle domestique d'un même utilisateur ou foyer). Par ce mécanisme, le canal de communication via WiFi redevient le canal de communication privilégié par le terminal de communication mobile tant qu'il est à proximité de la passerelle, en lieu et place du canal de communication via le réseau cellulaire utilisé par défaut en l'absence de réseau WiFi. Ceci a un effet bénéfique en permettant une économie de ressources globale, puisqu'il a été démontré que les échanges de données (i.e. le trafic Internet) mis en oeuvre via un canal de communication WiFi sont, lorsqu'ils sont considérés dans leur ensemble, moins énergivores que les échange de données mis en oeuvre via le réseau cellulaire.

Dans le cadre de la présente technique, au moins deux approches peuvent être adoptées pour établir la proximité géographique d'un terminal de communication mobile avec l'équipement passerelle.

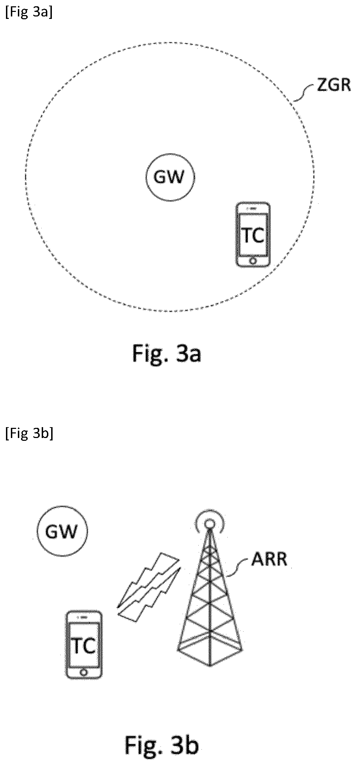

Selon une première approche, les coordonnées géographiques courantes du terminal de communication mobile sont exploitées. De telles coordonnées sont obtenues par exemple via un système de positionnement par satellites (e.g. GPS, Galileo, Glonass, etc.) et au moyen d'une puce dédiée embarquée dans le terminal. Il s'agit donc ici de comparer la position du terminal de communication mobile à la position, généralement fixe, de l'équipement passerelle, sur la base d'un système de coordonnées géographiques. Plus particulièrement, selon une caractéristique particulière, la proximité géographique du terminal de communication mobile TC avec l'équipement passerelle GW est confirmée lorsque les coordonnées géographiques du terminal de communication mobile sont représentatives d'une présence de ce terminal dans une zone géographique de référence préalablement déterminée, et associée à l'équipement passerelle. Par exemple, comme illustré sur la **figure 3a**, la zone géographique de référence ZGR peut prendre la forme d'une zone circulaire dont le centre correspond sensiblement à une position géographique de l'équipement passerelle GW, et dont le rayon a été préalablement fixé (par exemple de l'ordre de quelques dizaines à quelques centaines de mètres). Contrairement au terminal de communication mobile, la passerelle n'est généralement pas équipée d'une puce lui permettant d'être localisée par satellites. Aussi, les coordonnées géographiques de cet équipement sont par exemple saisies manuellement dans une interface graphique, ou bien déterminées automatiquement (c'est-à-dire sans intervention d'un opérateur humain, que ce soit un utilisateur de l'équipement passerelle ou un opérateur qui le commercialise). Une telle détermination automatique peut être effectuée sur la base d'une adresse (e.g. adresse postale, adresse IP, etc.) associée à la passerelle dans une structure de données (par exemple au sein d'une base de données administrée par l'opérateur qui commercialise la passerelle). Selon une caractéristique particulière, la zone géographique de référence peut ainsi notamment être déterminée automatiquement, c'est-à-dire sans intervention manuelle humaine spécifique, en fonction de l'adresse associée à l'équipement passerelle. Une autre alternative pour déterminer de manière automatique les coordonnées géographiques de l'équipement passerelle GW consiste à considérer que ces coordonnées correspondent sensiblement à celles du terminal de communication lorsque celui-ci est connecté au réseau local -et plus particulièrement au réseau local sans fil, typiquement au réseau WiFi - fourni par l'équipement passerelle GW. En d'autres termes, il est considéré que les coordonnées géographiques du terminal de communication connecté au réseau local forment une bonne approximation (ou à tout le moins une approximation suffisante dans le cadre de la présente technique) des coordonnées géographiques de l'équipement passerelle (par exemple pour une première initialisation de ces coordonnées). Selon une caractéristique particulière, pour qu'une telle approximation soit la meilleure possible, les coordonnées géographiques retenues pour l'équipement passerelle sont celles du terminal de communication lorsqu'il est détecté qu'un signal radio reçu dans le cadre de la connexion de ce terminal au réseau local sans fil fourni par l'équipement passerelle GW atteint un maximum de puissance (e.g. lorsque le RSSI, ou « *Received Signal Strength Indicator* » en anglais, est maximal).

Selon une deuxième approche, la position du terminal de communication mobile est déterminée, au moins de manière approximative, par identification d'au moins une antenne-relais d'un réseau cellulaire à laquelle le terminal de communication est présentement rattaché (i.e. connecté). On exploite donc dans ce cas l'interface de communication cellulaire du terminal de communication mobile, et sa capacité à se connecter à un réseau cellulaire (par exemple le réseau cellulaire CN illustré en relation avec la figure 1) lorsqu'il se trouve dans une zone de couverture d'au moins une antenne-relais de ce réseau, pour estimer sa position. Dans cette deuxième approche, comme illustré sur la **figure 3b**, la proximité géographique du terminal de communication mobile TC avec l'équipement passerelle GW est alors établie lorsqu'un rattachement courant du terminal de communication mobile à au moins une antenne-relais de référence ARR préalablement déterminée du réseau cellulaire est détecté. Le ou les antennes-relais de référence correspondent généralement à des antennes-relais proches de l'équipement passerelle GW. De telles antenne-relais de référence peuvent par exemple être identifiées et sélectionnées manuellement dans une interface graphique dédiée, ou, de manière alternative, être identifiées automatiquement sur la base d'une adresse (e.g. adresse postale, adresse IP, etc.) associée à la passerelle dans une structure de données (par exemple au sein d'une base de données administrée par l'opérateur qui commercialise la passerelle). Selon une caractéristique particulière, une autre alternative pour déterminer de manière automatique une ou plusieurs antennes-relais de référence aptes à être utilisées ultérieurement pour confirmer la proximité géographique d'un terminal de communication avec l'équipement passerelle GW consiste à identifier la ou les antennes-relais auxquelles le terminal de communication est rattaché lorsqu'il est, de manière simultanée, connecté au réseau local - et plus particulièrement au réseau local sans fil, typiquement au réseau WiFi - fourni par l'équipement passerelle GW. Ces antennes-relais sont alors sélectionnées comme antennes-relais de référence.

Dans le cadre de la présente technique, les approches présentées précédemment pour déterminer si le terminal de communication mobile est géographiquement proche ou non de l'équipement passerelle peuvent être mises en oeuvre au sein de différents équipements, comme détaillé dans les modes de réalisation particuliers présentés ci-après.

Dans un premier mode de réalisation, la détermination de la proximité du terminal de communication mobile avec l'équipement passerelle est mise en oeuvre par le terminal de communication mobile TC lui-même, par exemple dans le cadre de l'exécution d'une application dédiée sur le terminal de communication mobile, spécifiquement conçue pour implémenter l'une ou l'autre des deux approches précédemment présentées. Dans ce cas, une zone géographique de référence et/ou au moins une antenne-relais de référence sont par exemple stockées dans une mémoire du terminal de communication mobile, ou dans une structure de données accessibles de ce terminal par exemple via une connexion au réseau cellulaire. Aussi, dans ce premier mode de réalisation, l'information de localisation IL obtenue par le dispositif électronique en étape 21 prend la forme d'une donnée indicative de proximité, reçue par le dispositif électronique en provenance du terminal de communication, confirmant la proximité géographique du terminal de communication mobile TC avec l'équipement passerelle GW. Dans un tel mode de réalisation, le dispositif électronique reçoit donc directement, via le réseau étendu WAN (éventuellement par l'intermédiaire d'un ou plusieurs serveurs intermédiaires de ce réseau étendu), l'information que le terminal de communication mobile est proche de l'équipement passerelle, et il peut mettre en oeuvre l'étape 22 d'activation sans qu'il soit nécessaire de procéder à des vérifications supplémentaires.

Dans d'autres modes de réalisation, la détermination de la proximité du terminal de communication mobile avec l'équipement passerelle est mise en oeuvre par le dispositif électronique DE.

Ainsi, dans un deuxième mode de réalisation particulier, l'information de localisation IL obtenue par le dispositif électronique DE en étape 21 prend la forme de coordonnées géographiques (par exemple des coordonnées GPS) du terminal de communication mobile TC, reçues par le dispositif électronique en provenance du terminal de communication mobile via le réseau étendu WAN (éventuellement par l'intermédiaire d'un ou plusieurs serveurs intermédiaires de ce réseau étendu). Dans un tel mode de réalisation, le dispositif électronique DE procède donc lui-même à la mise en oeuvre de la première approche précédemment présentée, et l'étape 22 d'activation est conditionnée à la vérification, par le dispositif électronique DE, que les coordonnées géographiques courantes du terminal de communication mobile sont représentatives d'une présence de ce terminal dans la zone géographique de référence préalablement déterminée et associée à l'équipement passerelle GW.

Selon un principe analogue, dans un troisième mode de réalisation particulier, l'information de localisation IL obtenue par le dispositif électronique DE en étape 21 prend la forme de de données représentatives d'un rattachement courant du terminal de communication mobile TC à au moins une antenne-relais de position géographique connue au sein d'un réseau cellulaire comprenant ladite au moins une antenne-relais. De telles données peuvent être reçues par le dispositif électronique en provenance du terminal de communication mobile lui-même, via le réseau étendu WAN (éventuellement par l'intermédiaire d'un ou plusieurs serveurs intermédiaires de ce réseau étendu), ou obtenues auprès d'un autre équipement du réseau étendu, typiquement un équipement tiers d'un opérateur du réseau cellulaire (un tel opérateur ayant par nature aisément accès à ce type d'information). Dans ce troisième mode de réalisation, le dispositif électronique DE procède donc lui-même à la mise en oeuvre de la deuxième approche précédemment présentée, et l'étape 22 d'activation est conditionnée à la vérification, par le dispositif électronique DE, que les données obtenues sont représentatives d'un rattachement courant du terminal de communication mobile à au moins une antenne-relais de référence préalablement déterminée du réseau cellulaire (i.e. à une antenne-relais a priori proche de l'équipement passerelle GW).

Selon un autre aspect, la présente technique se rapporte également à un dispositif électronique pour l'activation d'au moins une fonctionnalité d'un équipement passerelle faisant l'interface entre un réseau étendu et un réseau local, ce dispositif électronique étant apte à mettre en oeuvre le procédé précédemment décrit dans l'un quelconque de ses modes de réalisation. Un tel dispositif électronique est par exemple sous le contrôle d'un opérateur qui commercialise l'équipement passerelle, en plus éventuellement d'administrer un réseau cellulaire. Le dispositif électronique est connecté au réseau étendu, et la fonctionnalité qu'il permet d'activer (e.g. une sortie de veille, une activation du WiFi) est liée au réseau local fourni par l'équipement passerelle. Plus particulièrement, un tel dispositif électronique comprend des moyens d'activation de ladite au moins une fonctionnalité liée au réseau local, qui sont mis en oeuvre lorsqu'une information de localisation d'au moins un terminal de communication mobile associé à l'équipement passerelle est représentative d'une proximité géographique dudit terminal de communication mobile avec ledit équipement passerelle.

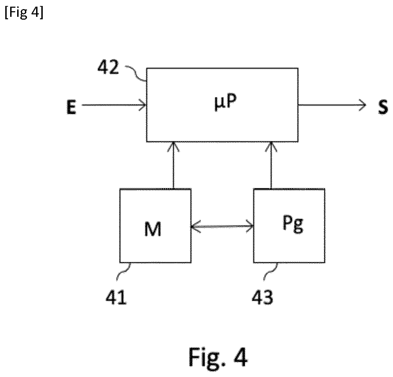

La **figure 4** représente, de manière schématique et simplifiée, la structure d'un tel dispositif électronique, dans un mode de réalisation particulier. Ce dispositif électronique est par exemple intégré dans ou confondu avec un serveur de traitement connecté au réseau étendu, ou, de manière alternative, intégré dans ou confondu avec l'équipement passerelle.

Le dispositif électronique selon la technique proposée comprend par exemple une mémoire 41 constituée d'une mémoire tampon M, une unité de traitement 42, équipée par exemple d'un microprocesseur µP, et pilotée par le programme d'ordinateur Pg 43, mettant en oeuvre le procédé d'activation selon l'invention.

À l'initialisation, les instructions de code du programme d'ordinateur 43 sont chargées dans la mémoire tampon avant d'être exécutées par le processeur de l'unité de traitement 42. L'unité de traitement 42 reçoit en entrée E une information de localisation d'au moins un terminal de communication mobile associé à un équipement passerelle.

Le microprocesseur de l'unité de traitement 42 réalise alors les étapes du procédé précédemment décrit, selon les instructions du programme d'ordinateur 43, pour délivrer en sortie S une commande d'activation d'au moins une fonctionnalité de l'équipement passerelle. Losque le dispositif électronique est intégré dans ou confondu avec un serveur de traitement, la sortie S prend par exemple la forme d'une requête d'activation de ladite au moins une fonctionnalité, qui est transmise à l'équipement passerelle via le réseau étendu (au moyen par exemple d'une interface réseau - par exemple une carte Ethernet - comprise dans le dispositif électronique). Plus particulièrement, selon le mode de réalisation implémenté, le microprocesseur 42 obtient soit une confirmation que le terminal de communication est à proximité géographique de l'équipement passerelle (auquel cas il émet directement en sortie S la commande d'activation), soit des données lui permettant d'évaluer lui-même si le terminal de communication est à proximité géographique ou non de l'équipement passerelle (auquel cas l'émission en sortie S de la commande d'activation est conditionnée à la vérification préalable qu'une telle proximité existe).

## Revendications

1. Procédé d'activation d'au moins une fonctionnalité d'un équipement passerelle (GW) faisant l'interface entre un réseau étendu (WAN) et un réseau local (LAN), ladite fonctionnalité étant liée audit réseau local, ledit procédé étant **caractérisé en ce qu'**il comprend, au niveau d'un dispositif électronique connecté audit réseau étendu, l'activation (22) via ledit réseau étendu de ladite au moins une fonctionnalité liée audit réseau local, lorsqu'une information de localisation (IL) d'au moins un terminal de communication mobile (TC) associé audit équipement passerelle est représentative d'une proximité géographique dudit terminal de communication mobile avec ledit équipement passerelle.

2. Procédé selon la revendication 1, **caractérisé en ce que** ladite fonctionnalité appartient au groupe comprenant :
- une sortie d'un état de veille dudit équipement passerelle ; et/ou
- une activation d'au moins un point d'accès sans fil au niveau dudit équipement passerelle.

3. Procédé selon la revendication 1, **caractérisé en ce que** ladite information de localisation (IL) prend la forme d'une donnée indicative de proximité, reçue par ledit dispositif électronique en provenance dudit terminal de communication, confirmant ladite proximité géographique dudit terminal de communication mobile avec ledit équipement passerelle.

4. Procédé selon la revendication 1, **caractérisé en ce que** ladite information de localisation (IL) prend la forme de coordonnées géographiques dudit terminal de communication mobile reçues par ledit dispositif électronique en provenance dudit terminal de communication mobile, et **en ce que** ladite proximité géographique dudit terminal de communication mobile avec ledit équipement passerelle est établie par le dispositif électronique lorsque lesdites coordonnées géographiques sont représentatives d'une présence dudit terminal de communication mobile dans une zone géographique de référence (ZGR) préalablement déterminée et associée audit équipement passerelle.

5. Procédé selon la revendication 4, **caractérisé en ce que** ladite zone géographique de référence est déterminée automatiquement en fonction d'une adresse associée audit équipement passerelle.

6. Procédé selon la revendication 4, **caractérisé en ce que** ladite zone géographique de référence est une zone circulaire dont le centre correspond à une position géographique dudit équipement passerelle, et dont le rayon est préalablement déterminé.

7. Procédé selon la revendication 1, **caractérisé en ce que** ladite information de localisation (IL) prend la forme de données représentatives d'un rattachement courant dudit terminal de communication mobile à au moins une antenne-relais de position géographique connue au sein d'un réseau cellulaire (CN) comprenant ladite au moins une antenne-relais, reçues par ledit dispositif électronique en provenance dudit terminal de communication ou en provenance d'un équipement tiers d'un opérateur dudit réseau cellulaire, et **en ce que** ladite proximité géographique dudit terminal de communication mobile avec ledit équipement passerelle est établie par le dispositif électronique lorsque lesdites données sont représentatives d'un rattachement courant dudit terminal de communication mobile à au moins une antenne-relais de référence (ARR) préalablement déterminée dudit réseau cellulaire.

8. Procédé selon la revendication 7, **caractérisé en ce que** ladite au moins une antenne-relais de référence est déterminée automatiquement en fonction d'une adresse associée audit équipement passerelle et/ou en fonction d'une identification préalable d'au moins une antenne-relais à laquelle le terminal de communication mobile est rattaché lorsque ledit terminal de communication mobile est connecté à un réseau local sans fil fourni par ledit équipement passerelle.

9. Dispositif électronique pour l'activation d'au moins une fonctionnalité d'un équipement passerelle faisant l'interface entre un réseau étendu et un réseau local, ledit dispositif électronique étant connecté audit réseau étendu et ladite fonctionnalité étant liée audit réseau local, ledit dispositif électronique étant **caractérisé en ce qu'**il comprend des moyens d'activation de ladite au moins une fonctionnalité liée audit réseau local, mis en oeuvre lorsqu'une information de localisation d'au moins un terminal de communication mobile associé audit équipement passerelle est représentative d'une proximité géographique dudit terminal de communication mobile avec ledit équipement passerelle.

10. Terminal de communication mobile associé à un équipement passerelle faisant l'interface entre un réseau étendu (WAN) et un réseau local (LAN), ledit terminal de communication mobile étant **caractérisé en ce qu'**il est configuré pour transmettre à un dispositif électronique selon la revendication 9 une information de localisation (IL) représentative d'une proximité géographique dudit terminal de communication mobile avec ledit équipement passerelle.

11. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé d'activation d'au moins une fonctionnalité d'un équipement passerelle selon l'une quelconque des revendications 1 à 8, lorsqu'il est exécuté par un ordinateur.
